# EUROPEAN PATENT SPECIFICATION

(11) **EP 2 098 320 B1**
(45) Date of publication and mention of the grant of the patent: **07.05.2014**
(21) Application number: 09250655.9
(22) Date of filing: 09.03.2009
(51) Int. Cl.: B23D 45/04, B23D 47/02

(54) **Miter adjustment assembly for a saw**
Gehrungseinstellungsvorrichtung für eine Säge
Ensemble de réglage de l'onglet pour scie

(30) Priority: 07.03.2008 US 34798 P
(43) Date of publication of application: 09.09.2009
(73) Proprietor: Milwaukee Electric Tool Corporation, Brookfield, WI 53005 (US)
(72) Inventor: Hetcher, Jason D., Waukesha, WI 53189 (US); Willer, Mark D., Brookfield, WI 53005 (US); Elger, William A., West Bend, WI 53095 (US); Papenfuss, Harold L., Menomonee Falls, Wi 53051 (US); Richards, Daryl S., Sussex, WI 53089 (US); Bauer, David R., Delafield, WI 53018 (US); Weber, Michael E., Hartland, WI 53029 (US); Fernandes, Erix X., Franklin, Wi 53132 (US); Hlavac, David, Germantown, WI 53022 (US); Welliver, Michael L., Milwaukee, WI 53132 (US); Schneider, Daniel H., Franklin, Wi 53132 (US)
(74) Representative: Holmes, Matthew Peter

(56) References cited:
- US-A- 5 862 732
- US-A1- 2005 262 984

## Description

This invention relates generally to power tools and, more particularly, to saws, such as miter saws, chop saws, etc.

When using a miter saw, an operator sometimes needs to adjust a cut slightly from a known or unknown starting angle (e.g. an angle corresponding to a pre-set miter detent position, the angle used for earlier cuts on associated work pieces, etc.). With conventional miter saws, the operator must slightly move the table in small angular increments (e.g. by gently tapping the side of the table). This may not be an accurate or repeatable method for making a slight angular change. Furthermore, several motions are usually involved in locking and unlocking the table to the base in a conventional miter saw to prevent movement of the table once the angle is set. Therefore, extra effort may be required by an operator who needs to make an angle adjustment at or near a detent in a conventional miter saw.

US 2005/0262984 discloses a miter saw with a coarse adjustment assembly, including a detent mechanism, and a fine adjustment assembly for making accurate fine adjustments to the miter saw table. The miter saw is also provided with a detent override assembly to disengage the detent during fine adjustment. This known saw includes the features of the pre-characterizing portion of claim 1.

### SUMMARY OF THE INVENTION

According to the present invention there is provided a power tool comprising a base supportable on a surface to support the power tool on the surface; a table supported by the base for pivoting movement about an axis; a detent assembly operable to position the table relative to the base in a selected angular position, the detent assembly including a detent projection supported on one of the base and the table, a lever pivotably coupled to the one of the base and the table, and a detent recess defined by the other of the base and the table, the lever being pivotable to deflect the detent projection between a detent engaged position, in which the detent projection engages the detent recess, and a detent disengaged position, in which the detent projection is not engaged with the recess; and a fine adjustment assembly between the base and the table and operable to finely adjust the angular position of the table relative to the base, the fine adjustment assembly including a shaft supported by one of the base and the table, a rotating member coupled to the shaft, an engagement surface provided by the other of the base and the table, the rotating member being selectively engageable with and rotatable along the engagement surface to finely adjust the angular position of the table relative to the base, and a detent override assembly operable to disengage the detent projection from the detent recess and hold the detent projection out of engagement with the detent recess when the rotating member is engaged with the engagement surface, the detent override assembly including a ramp which is axially movable along a rotational axis of the shaft in response to movement of the rotating member towards the engagement surface to thereby engage the lever such that a portion of the lever slides on the ramp to pivot the lever and deflect the detent projection to the detent disengaged position, characterized in that the detent projection is coupled to a leaf spring which is supported on said one of the base and table, wherein the lever is pivotable to deflect the leaf spring between a detent engaged position, in which the detent projection engages the detent recess, and a detent disengaged position, in which the detent projection is not engaged with the recess, and in that the ramp is coupled to a slide block which rotatably supports the shaft, the slide block being axially movable along the rotational axis of the shaft in response to movement of the rotating member toward the engagement surface to thereby engage the lever with the ramp to pivot the lever and deflect the leaf spring from the detent engaged position to the detent disengaged position.

The portion of the lever which slides on the ramp may comprise a tab that is engageable with the ramp to cause the lever to pivot. In addition, the detent override assembly may include a notch adjacent to the ramp, wherein the tab is engageable with the notch to prevent the lever from pivoting upwardly to allow the leaf spring to resume the detent engaged position.

The power tool may further comprise a bracket coupled to an interior surface of the table, wherein the slide block is supported between the bracket and the table. The side block, the ramp and the shaft may be axially moveable as a unit. Additionally, the lever may be pivotably coupled to the bracket.

Other features and aspects of the invention will become apparent by consideration of the following detailed description and accompanying drawings.

### BRIEF DESCRIPTION OF THE DRAWINGS

FIG. 1 is a front perspective view of a miter saw of the present invention incorporating a miter angle fine-adjustment assembly.

FIG. 2 is a bottom view of a table, base, and miter angle fine-adjustment assembly of the miter saw of FIG. 1.

FIG. 3 is an exploded, perspective view of the table, base, and miter angle fine-adjustment assembly of FIG. 1.

FIG. 4 is a top view of the miter angle fine-adjustment assembly of FIG. 1.

FIG. 5 is a bottom view of the miter angle fine-adjustment assembly of FIG. 1.

FIG. 6 is a cross-sectional view of the table, base, and miter angle fine-adjustment assembly of FIG. 1 along section 6-6 in FIG. 2, illustrating the miter angle fine-adjustment assembly disengaged from the base.

FIG. 7 is a cross-sectional view of the table, base, and miter angle fine-adjustment assembly of FIG. 1 along section 7-7 in FIG. 2, illustrating the miter angle fine-adjustment assembly engaged with the base.

FIG. 8 is a cross-sectional view of the table, base, and miter angle fine-adjustment assembly of FIG. 1 along section 8-8 in FIG. 6, illustrating the miter angle fine-adjustment assembly disengaged from the base.

FIG. 9 is a cross-sectional view of the table, base, and miter angle fine-adjustment assembly of FIG. 1 along section 9-9 in FIG. 7, illustrating the miter angle fine-adjustment assembly engaged with the base.

Before any features and at least one embodiment of the invention are explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein is for the purpose of description and should not be regarded as limiting.

### DETAILED DESCRIPTION

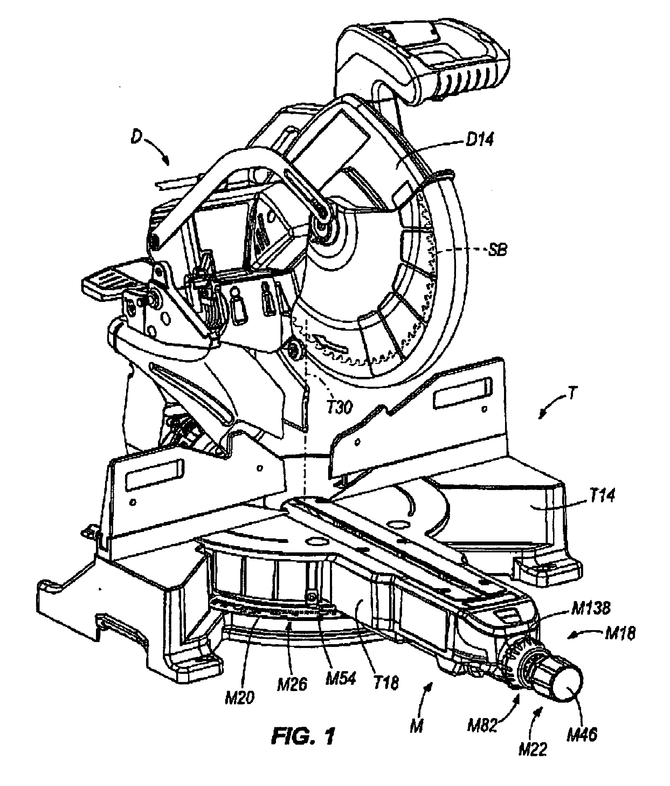

With reference to FIG. 1, a miter saw including a base and table assembly T is shown having a base T14 and a table T18 for supporting a work piece. The base and table assembly T supports a drive assembly D operable to drive a saw blade SB to cut a work piece supported on the base and table assembly T. The drive assembly D includes a saw unit D14 (including the saw blade SB), a motor, and a drive train operable to drive the saw blade SB. Such a drive assembly D is disclosed in U.S. Patent Application Serial No. 11/107,384, filed April 15, 2005, the entire content of which is incorporated herein by reference.

With continued reference to FIG. 1, the table T18 is coupled to the base T14 for pivoting movement about a generally vertical miter axis T30. The drive assembly D and the saw blade SB are coupled to the table T18 for pivoting movement with the table T18 relative to the base T14 to allow the saw blade SB to perform various angled miter cuts on a work piece supported on the table T18 and/or on the base T14.

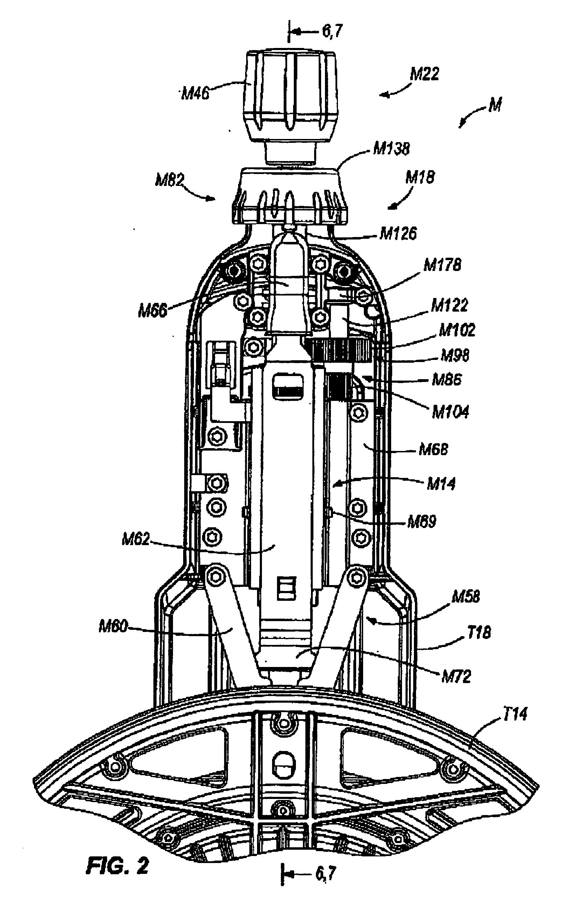

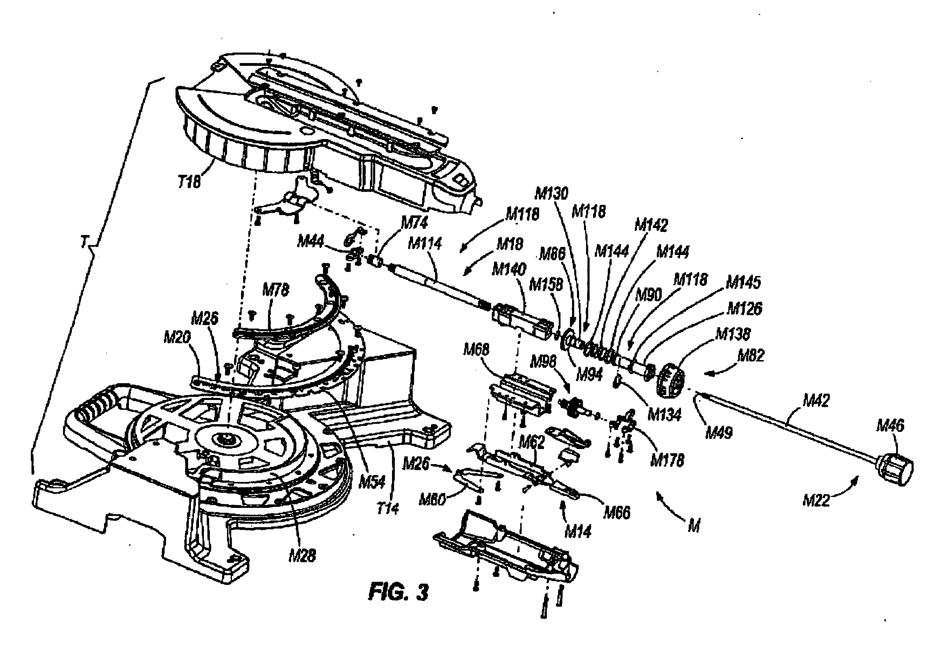

The table and base assembly T includes a miter adjustment assembly M providing for adjustment of the angle of the saw blade SB relative to a work piece and the base T14 about the miter axis T30. With reference to FIGS. 2-9, the miter adjustment assembly M includes a coarse adjustment assembly M14 for making relatively large angular adjustments of the miter angle, and a fine adjustment assembly M18 for making accurate and/or repeatable incremental adjustments of the miter angle. The miter angle is indicated on a miter scale M20 coupled to the base T14 (see FIGS. 1 and 3).

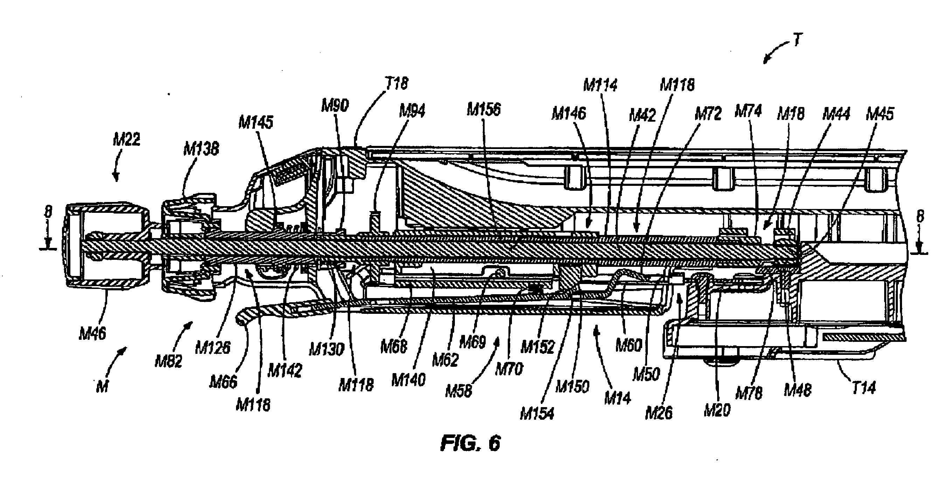

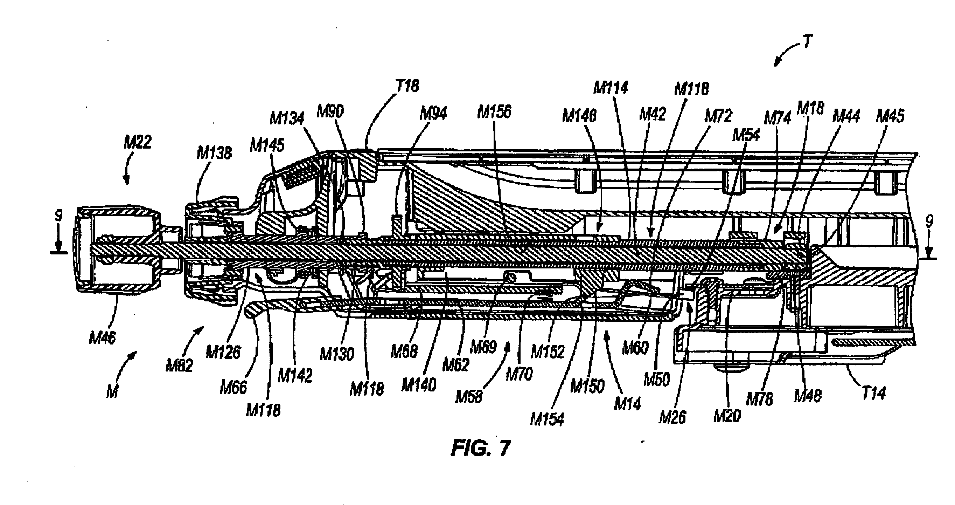

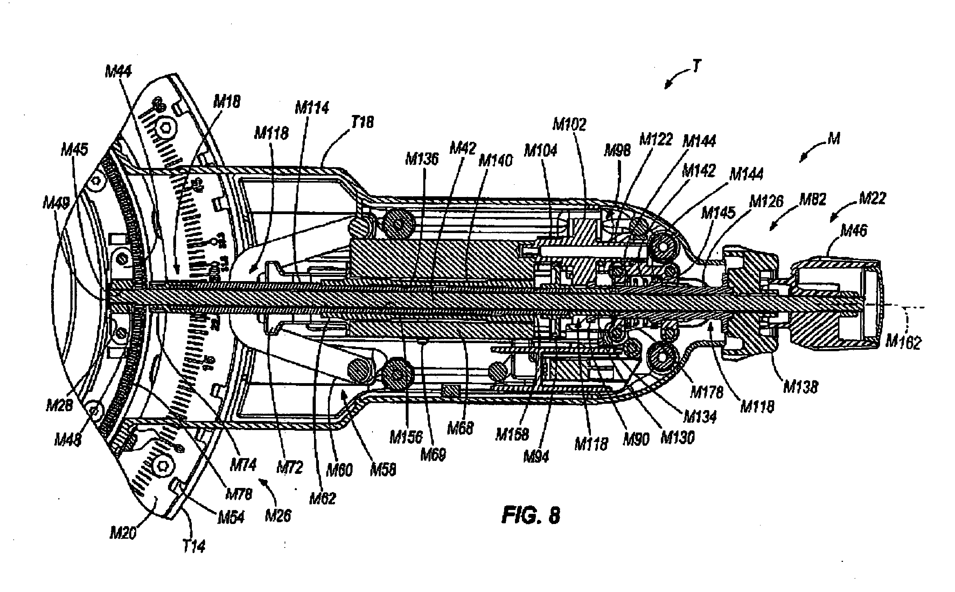

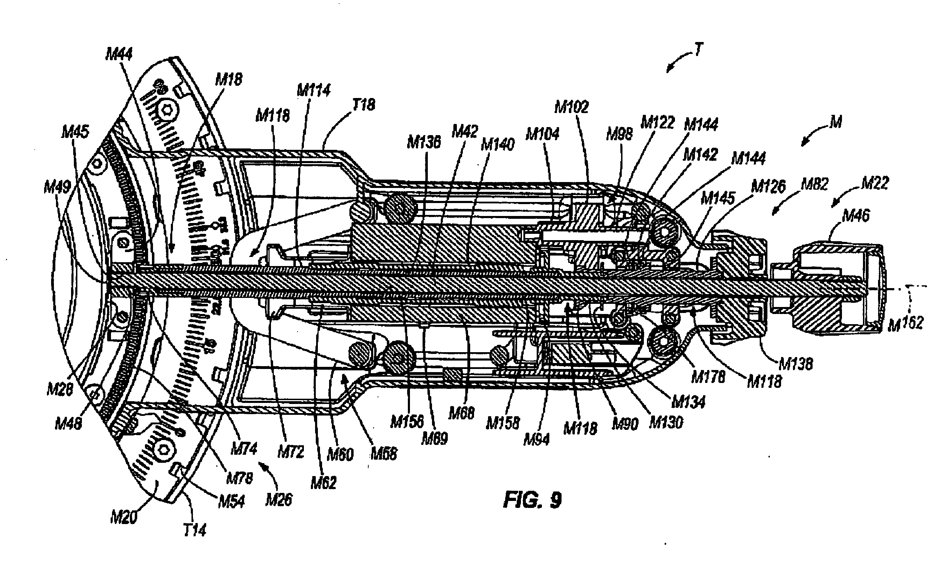

With reference to FIG. 3, the coarse adjustment assembly M14 includes a miter locking assembly M22 and a miter detent assembly M26. The miter locking assembly M22 enables the operator to lock the table T18 in substantially any available miter angle position relative to the base T14. The miter locking assembly M22 includes a lock bolt M42, a knob M46 secured to one end of the lock bolt M42, and a plurality of external threads M48 formed on an end of the bolt M42 opposite the knob M46 (see FIGS. 6 and 7). The miter locking assembly M22 also includes a mounting block M44 coupling the threaded end of the bolt M42 to the table T18. The block M44 includes a plurality of internal threads M45 that engage the external threads M48 on the bolt M42, such that rotation of the bolt M42 relative to the block M44 also axially displaces the bolt M42 relative to the block M44. With reference to FIGS. 8 and 9, the bolt M42 includes an end surface M49 in facing relationship with an arcuate wall M28 on the base T14. During operation of the table and base assembly T, the knob M46 and bolt M42 are rotated between a first or locked position, in which the end M49 of the bolt M42 engages the wall M28 to rotationally secure the table T18 relative to the base T14, and a second or unlocked position, in which the end M49 of the bolt M42 is spaced from the wall M28 to allow the table T 18 to be rotated relative to the base T 14 to change the miter angle.

To unlock the table T18 from the base T14, starting from the locked position, the knob M46 need only be rotated in a counterclockwise direction to axially displace the bolt M42 relative to the block M44, thereby disengaging the end M49 of the bolt M42 from the wall M28. A user may then adjust the position of the table T18 to the left or the right to any available miter angle position. To re-lock the table T18 to the base T14, the knob M46 need only be rotated in a clockwise direction to axially displace the bolt M42 relative to the block M44, thereby engaging the end M49 of the bolt M42 and the wall M28.

With reference to FIGS. 2 and 3, the miter detent assembly M26 provides the user with an arrangement to position the table T18 in one or more selected miter angle positions relative to the base T14 (e.g., 0 degrees; left 15 degrees, 22.5 degrees, 30 degrees and 45 degrees; right 15 degrees, 22.5 degrees, 30 degrees, 45 degrees, and 60 degrees; etc.). The assembly M26 includes a detent projection M50 (see FIGS. 6 and 7) that is selectively engageable in one or more detent notches or recesses M54, each of which corresponds to a selected miter angle position on the miter scale M20. In the illustrated construction, the recesses M54 are provided on the base T14 (e.g., formed on the miter scale M20), and the projection M50 is supported by the table T18.

The miter detent assembly M26 also includes a detent actuator assembly M58 for moving the projection M50 between a detent engaged position (see FIG. 6), in which the projection M50 engages a recess M54, and an out-of-detent or detent disengaged position (see FIG. 7), in which the projection M50 is not engaged with a recess M54. The assembly M58 includes a resilient member or leaf spring M60 having a distal end to which the projection M50 is coupled, a lever M62 pivotably coupled to the table T 18 to deflect the leaf spring M60 between the detent engaged position and the detent disengaged position, and a handle M66 coupled to the lever M62. In the illustrated construction, the projection M50 is integrally formed with the leaf spring M60, and the leaf spring M60 is coupled to the table T18 by a plurality of fasteners (e.g., screws, bolts, etc.) via a bracket M68 (discussed in more detail below). Alternatively, the leaf spring M60 may be integrally formed with the table T18 or the bracket M68 and pivotable relative to the table T18 or the bracket M68 by a living hinge or different structure.

The detent actuator assembly M58 includes the previously-mentioned bracket M68 (see FIG. 3) coupled to an interior surface of the table T18 (e.g., by a plurality of fasteners, by an adhesive, etc.). A middle portion of the lever M62 is pivotably coupled to the bracket M68 by a pin M69 (see FIGS. 6 and 7), while a tip M72 of the lever M62 engages the leaf spring M60. Alternatively, the lever M62 may be integrally formed with the bracket M68 and pivotable relative to the table T18 by a living hinge or different structure. A biasing member (e.g., a spring M70) biases the projection M50 toward the detent engaged position. With reference to FIGS. 6 and 7, the spring M70 is configured as a tension spring M70, and is positioned between the bracket M68 and the lever M62 to bias the lever M62 to a position corresponding to the detent engaged position.

Before operating the detent assembly M26, the user would first unlock the table T18 from the base T14, as described above with respect to the miter locking assembly M22. The user then lifts the handle M66 to lift the projection M50 out of the recess M54. The user then adjusts the position of the table T18 to the left or the right to the desired miter angle position. If the user continues to lift upwardly on the handle M66, thereby overcoming the biasing force of the spring M70, the leaf spring M60 will be maintained in a deflected condition to prevent the projection M50 from engaging any of the recesses M54 in the miter scale M20 as the table T18 is rotated relative to the base T14. However, if the user releases the handle M66, the biasing force of the spring M70 will lift the tip M72 of the lever M62, allowing the leaf spring M60 to resume its undeflected shape, thereby causing the projection M50 to slide on the miter scale M20 and engage the next recess M54 encountered by the projection M50. The miter detent assembly M22, by itself, is sufficient to hold or maintain the table T18 in the selected miter angle position. However, the user may also actuate the miter locking assembly M22 to more positively lock the table T18 to the base T14.

With reference to FIGS. 8 and 9, the fine adjustment assembly M18 generally includes inter-engaging members that are movable relative to each other to cause small incremental movement of the table T18 relative to the base T14. Specifically, the fine adjustment assembly M18 includes a rotating member (e.g., a pinion M74) that moves along a surface (e.g., a rack M78) upon rotation of the pinion M74. Alternatively, the fine adjustment assembly M18 may utilize a pad and friction roller in place of the rack M78 and pinion M74. The rack M78 is supported by the base T14 rearward of the miter scale M20 and has an arcuate shape. In the illustrated construction, the rack M78 is a separate and distinct component coupled to the base T14 by a plurality of fasteners (see also FIG. 3). Alternatively, the rack M78 may be integrally formed with the base T14 as a single piece. With reference to FIGS. 6 and 7, the pinion M74 is supported by the table T18. Rotation of the pinion M74 relative to the table T18, with the pinion M74 engaged to the rack M78, incrementally rotates the table T18 relative to the base T14 about the miter axis T30 to fine adjust the miter angle.

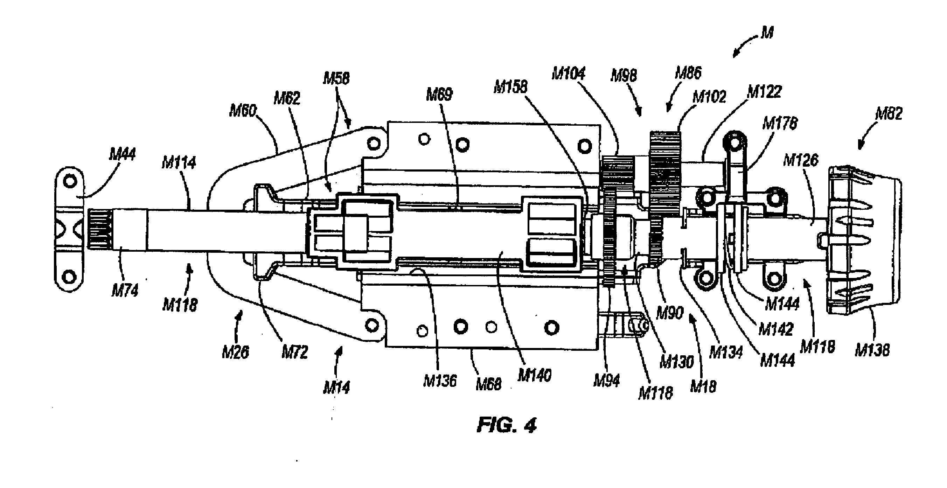

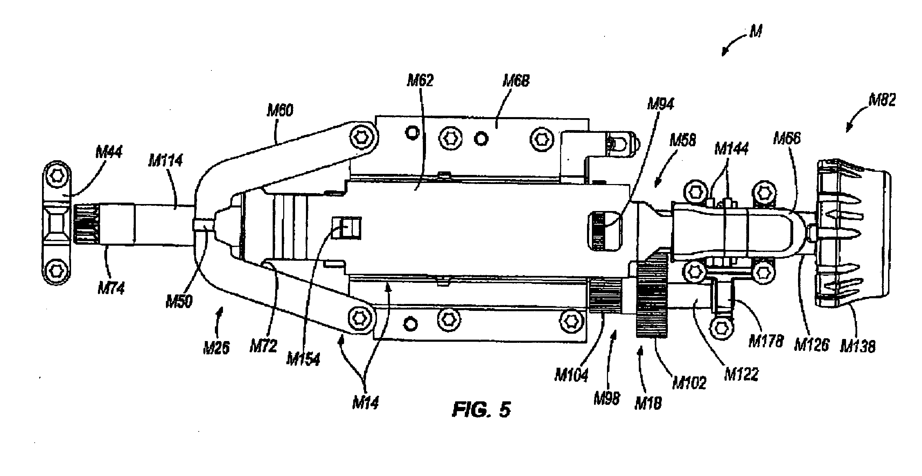

The fine adjustment assembly M18 also includes a drive assembly M86 (see FIGS. 4 and 5) operable to deliver torque to the pinion M74 to cause the pinion M74 to rotate. In the illustrated construction, the drive assembly M86 includes a drive gear M90, a driven gear M94, and a gear reduction assembly M98, including co-rotating gears M102, M104. The gear reduction assembly M98 is configured to provide a speed reduction and a resultant increase in torque between the drive gear M90 and the driven gear M94 which, ultimately, is fixed for co-rotation with the pinion M74. In the illustrated construction, the gear reduction assembly M98 includes a speed reduction ratio of about 88:1, such that about 88 revolutions of the drive gear M90 are required to complete about a single revolution of the driven gear M94. Alternatively, the gear reduction assembly M98 may be configured to provide any of a number of different speed reduction ratios between the drive gear M90 and the driven gear M94. For example, the speed reduction ratio may be in within a range of about 80:1 to about 100:1, such as at a speed reduction ratio of about 90:1.

With reference to FIGS. 4 and 8, the pinion M74 and the gears M90, M94 are coupled to a tube assembly M118, and the co-rotating gears M102, M104 are coupled to a gear reduction tube M122. Specifically, the drive gear M90 is carried by a drive gear tube M126, the driven gear M94 is carried by a driven gear tube M130, and the pinion M74 is carried by a pinion tube M114. In the illustrated construction, the pinion M74 is a separate and distinct component from the tube M114 that is fixed for co-rotation with the tube M114 (e.g., by an interference fit, adhesives, a key and keyway arrangement, etc.). Alternatively, the pinion M74 may be integrally formed with the tube M114.

With reference to FIGS. 3 and 8, the pinion tube M114 may be axially secured to the driven gear tube M130 (e.g., by an interference or press-fit, using adhesives, etc.), such that the tubes M114, M130 are axially moveable together as a unit. Alternatively, the pinion tube M114 may be axially biased toward the driven gear tube M130 (e.g., by the interaction of the spring M70, lever M62, and slide block M140 as discussed below). In addition, the tubes M114, M130 are fixed to each other for co-rotation (e.g., by inter-engaging flat surfaces, a key and keyway arrangement, etc.). With continued reference to FIGS. 3 and 8, the driven gear tube 130 is axially secured to the drive gear tube M126 by a clip M134, such that the tubes M126, M130 are axially moveable together as a unit. However, the tube M126 is rotatable relative to the tube M130 due to the speed reduction imparted to the tube M130 and the driven gear M94 by the gear reduction assembly 98.

With reference to FIGS. 3-5, 8, and 9, a bushing M178 rotatably couples the tube M126 to the table T18 and maintains axial alignment of the drive gear tube M126 with the pinion tube M114. The bushing M178 also supports one end of the gear reduction tube M122, with the other end of the tube M122 being rotatably supported by the bracket M68 (see FIGS. 8 and 9), to maintain the tube M122 substantially parallel to the tubes M126. M130, M114. Alternatively, the tubes M122, M126 may be supported by the table T18 in any of a number of different ways utilizing different structure.

In operation of the drive assembly M86, the pinion M74 is movable between a driving position, in which the pinion M74 and the rack M78 are engaged (see FIG. 9), and a disengaged position, in which the pinion M74 is slid out of engagement with the rack M78 (see FIG. 8). Also, the tube assembly M118 is movable relative to the gear reduction tube M122. With reference to FIGS. 8 and 9, the drive gear tube M126 and the gear M90 are slidable relative to the axially-fixed tube M122 and the axially-fixed gear M102. Likewise, the driven gear tube M130 and the gear M94 are slidable relative to the axially-fixed tube M122 and the axially-fixed gear M102. As shown in FIGS. 8 and 9, the respective gears M90, M102 and the respective gears M94, M104 remain engaged when the pinion M74 is engaged with the rack M78 (see FIG. 9) and when the pinion M74 is disengaged from the rack M78 (see FIG. 8). Alternatively, the drive assembly M86 may be configured to disengage the respective gears M90, M102, or the respective gears M94, M104, upon the pinion M74 disengaging the rack M78. The tubes M114, M126, M130 are axially slidable relative to the lock bolt M42, which extends through the tubes M114, M126, M130.

With reference to FIGS. 1-9, the fine adjustment assembly M18 also includes a fine adjustment actuator assembly M82 for causing rotating movement of the pinion M74 along the rack M78. The assembly M82 includes an actuator portion or knob M138 that is manipulated by the user to engage the drive assembly M86 and to operate the drive assembly M86 to fine adjust the miter angle. In the illustrated construction, the knob M138 is coupled to the tube M126 by a plurality of fasteners (e.g., screws, bolts, etc.; see FIGS. 6 and 7). Alternatively, the knob M138 may be integrally formed with the tube M126 as a single piece. With continued reference to FIGS. 6 and 7, the knob M138 is moved axially to engage the pinion M74 and the rack M78, and then is rotated to impart torque to the pinion M74 via the tubes M126, M122, M130, M114 to incremental ly rotate the pinion M74 and subsequently the table T18.

The actuator assembly M82 also includes a biasing member (e.g., a spring M142; see FIGS. 3, 8, and 9) positioned between a retainer M144 abutted against the bushing M178 and another retainer M144 abutted against a radially-extending flange M145 on the tube M126. As shown in FIG. 8, the spring M142 biases the knob M138 axially away from the table T18. Because the knob M138 moves axially with the tubes M126, M130, M114 as a unit, axial displacement of the knob M138 away from the table T18 also disengages the pinion M74 from the rack M78. To engage the fine adjustment assembly M18, the knob M138 is axially displaced toward the table T18, against the bias of the spring M 142.

With reference to FIGS. 3, 6, and 7, the drive assembly M86 also includes a detent override assembly M146 to disengage the projection M50 from the recesses M54 and hold the projection M50 out of engagement with the recesses M54. The detent override assembly M 146 includes a slide block M 140 received within a channel M 136 formed in the bracket, a ramp M150 coupled to the slide block M140, and a notch M152 adjacent the ramp M150. Both the ramp M150 and the notch M152 are engageable with a portion (e.g., an upwandly-extending tab M154) of the lever M62. With reference to FIGS. 6 and 7, the slide block M 140 includes an aperture M156 through which the tube M114 and the lock bolt M42 extend. As such, the slide block M140 rotatably supports the tube M114 and the lock bolt M42 relative to the table T18. Also, the slide block M140 is axially moveable along the channel M136 with the tubes M126, M130, M114. In the illustrated construction, a clip M158 coupled to the tube M114 is abutted with an end of the slide block M140, thereby causing the slide block M 140 and the tube M114 to be axially displaced toward the rack M78 as a unit (see FIGS. 3, 4, 7, and 9) when the knob M138 is depressed. Further, the interaction of the ramp M150 and the tab M154, as discussed in more detail below, causes the slide block M140 (and therefore the pinion tube M114) to be axially displaced away from the rack M78 when the knob M138 is released.

In operation of the detent override assembly M146, the knob M138 is depressed toward the table T18, causing the tubes M126, M130, M114 and the slide block M140 to axially displace toward the rack M78 as a unit to engage the pinion M74 with the rack M78. As the slide block M140 is axially displaced along the channel M136, the ramp M150 slides relative to the tab M154, causing the tip M72 of the lever M62 to pivot downwardly and downwardly-deflect the leaf spring M60 to disengage the projection M50 from the recess M54 (see FIG. 7). Upon engagement of the tab M154 and the notch M152, the tip M72 of the lever M62 is prevented from pivoting upwardly to allow the leaf spring M60 to resume its undeflected shape to re-engage the projection M50 with one of the recesses M54. That is, the detent override assembly M146 holds the detent assembly M26 in the detent disengaged position. The user may then rotate the knob M138 to operate the drive assembly M86 to fine adjust the miter angle.

Engagement of the tab M154 in the notch M152 also maintains the drive assembly M86 in the fine adjust mode. Slight rearward pressure on the knob M138 is sufficient to disengage the tab M154 from the notch M152. The upward bias exerted on the lever M62 by the spring M70 causes the tab M154 to slide along the ramp M150 as the tip of the lever M62 pivots upwardly, thereby returning the projection M50 to a recess-engageable condition.

As shown in FIGS. 8 and 9, components of the miter locking assembly M22, the actuator assembly M82, the drive assembly M86, and the detent override assembly M146 are aligned and are moveable along a common axis M162. Specifically, with respect to the miter locking assembly M22, the lock bolt M42 and the knob M46 are moveable along the axis M 162, relative to the table T18, to selectively lock the table T18 to the base T14. With respect to the actuator assembly M82, the knob M138 is moveable along the axis M162 to cause the pinion M74 to engage with the rack M78, and rotatable about the axis M162 to impart incremental rotation to the pinion M74. With respect to the drive assembly M86, the tubes M126, M130 and the respective gears M90, M94 are moveable along and rotatable about the axis M162, and the tube M114 and pinion M74 are moveable along and rotatable about the axis M162. With respect to the detent override assembly M146, the slide block is moveable along the axis M162 to selectively displace the projection M50 from the miter scale M20 to prevent the projection M50 from engaging any of the recesses M54 in the miter scale M20.

Although the invention has been described in detail with reference to certain preferred embodiments, variations and modifications exist within the scope and spirit of one or more independent aspects of the invention as described.

Various features of the invention are set forth in the following claims.

## Claims

1. A power tool comprising:
a base (T14) supportable on a surface to support the power tool on the surface;
a table (T18) supported by the base (T14) for pivoting movement about an axis (T30);
a detent assembly (M26) operable to position the table (T18) relative to the base (T14) in a selected angular position, the detent assembly (M26) including
a detent projection (M50) supported on one of the base (T14) and the table (T18),
a lever (M62) pivotably coupled to the one of the base (T14) and the table (T 18),
and
a detent recess (M54) defined by the other of the base (T14) and the table (T18), the lever (M62) being pivotable to deflect the detent projection (M50) between a detent engaged position, in which the detent projection (M50) engages the detent recess (M54), and a detent disengaged position, in which the detent projection (M50) is not engaged with the recess (M54); and
a fine adjustment assembly (M18) between the base (T14) and the table (T18) and operable to finely adjust the angular position of the table (T18) relative to the base (T14), the fine adjustment assembly (M18) including
a shaft (M114) supported by one of the base (T14) and the table (T18),
a rotating member (M74) coupled to the shaft (M114),
an engagement surface (M78) provided by the other of the base (T14) and the table (T18), the rotating member (M74) being selectively engageable with and rotatable (T18) along the engagement surface (M78) to finely adjust the angular position of the table (T18) relative to the base (T14), and
a detent override assembly (M146) operable to disengage the detent projection (M50) from the detent recess (M54) and hold the detent projection (M50) out of engagement with the detent recess (M54) when the rotating member (M74) is engaged with the engagement surface (M78),
the detent override assembly (M146) including a ramp (M150) which is axially movable along a rotational axis of the shaft (M114) in response to movement of the rotating member (M74) towards the engagement surface (M78) to thereby engage the lever (M62) such that a portion of the lever (M62) slides on the ramp (M150) to pivot the lever (M62) and deflect the detent projection (M50) to the detent disengaged position,
**characterized in that** the detent projection (M50) is coupled to a leaf spring (M60) which is supported on said one of the base (T 14) and table (T18), wherein the lever (M62) is pivotable to deflect the leaf spring (M60) between a detent engaged position, in which the detent projection (M50) engages the detent recess (M54), and a detent disengaged position, in which the detent projection (M50) is not engaged with the recess (M54),
and **in that** the ramp (M150) is coupled to a slide block (M140) which rotatably supports the shaft (M114), the slide block (M140) being axially movable along the rotational axis of the shaft (M114) in response to movement of the rotating member (M74) toward the engagement surface (M78) to thereby engage the lever (M62) with the ramp (M150) to pivot the lever (M62) and deflect the leaf spring (M60) from the detent engaged position to the detent disengaged position.

2. The power tool of claim 1, wherein the rotating member includes a pinion (M74) and the engagement surface includes a rack (M78), the pinion (M74) being engageable with and rotatable (T18) along the rack (M78) to finely adjust the angular position of the table (T18) relative to the base (T14), or wherein the rotating member includes a roller, and the engagement surface includes a pad, the roller being engageable with and rotatable along the pad to finely adjust the angular position of the table (T18) relative to the base (T14).

3. The power tool of claim 1 or 2, wherein the rotating member (M74) is supported by the table (T18), and wherein the engagement surface (M78) is provided by the base (T14).

4. The power tool of any preceding claim, wherein the fine adjustment assembly (M18) further includes an actuator assembly (M82) operable to cause movement of the rotating member (M74) relative to the engagement surface (M78).

5. The power tool of claim 1, wherein the actuator assembly (M82) is operable to cause selective engagement of the rotating member (M74) and the engagement surface (M78).

6. The power tool of claim 5, wherein the actuator assembly (M82) defines an axis, and wherein the rotating member (M74) is movable along the axis into and out of engagement with the engagement surface (M78).

7. The power tool of claim 6, wherein the fine adjustment assembly (M18) includes a biasing member (M142) operable to bias the rotating member (M74) out of engagement with the engagement surface (M78).

8. The power tool of claim 7, wherein the biasing member (M142) is supported between the actuator assembly (M82) and the one of the base (T14) and the table (T18).

9. The power tool of any one of claims 6 to 8, wherein the actuator assembly (M82) includes
an actuator (M138) operable to move the shaft (M114) along the axis to cause the rotating member (M74) to move into and out of engagement with the engagement surface (M78) and to rotate the shaft (M114) to cause rotation of the rotating member (M74) relative to the engagement surface (M78).

10. The power tool of any preceding claim, wherein said portion (M154) of the lever (M62) is a tab (M154) that is engageable with the ramp (M150) to cause the lever (M62) to pivot.

11. The power tool of any preceding claim, wherein the leaf spring (M60) and the lever (M62) are supported by the table (T18), and wherein the detent recess (M54) is defined by the base (T14).

12. The power tool of claim 10, wherein the detent override assembly (M146) includes a notch (M152) adjacent to the ramp (M150), and wherein the tab (M154) is engageable
with the notch (M1152) to prevent the lever (M62) from pivoting upwardly to allow the leaf spring (M60) to resume the detent engaged position.

13. The power tool of any preceding claim, further comprising a bracket (M68) coupled to an interior surface of the table (T18), wherein the slide block (M140) is supported between the bracket (M68) and the table (T18).

14. The power tool of claim 13, wherein the slide block (M 140), the ramp (M 150) and the shaft (M114) are axially movable as a unit.

15. The power tool of claim 13 or 14, wherein the lever (M62) is pivotably coupled to the bracket (M68).

## Patentansprüche

1. Elektrowerkzeug, umfassend:
einen Unterbau (T14), der auf einer Fläche getragen werden kann, um das Elektrowerkzeug auf der Fläche zu tragen;
einen Tisch (T18), der vom Unterbau (T14) für eine Drehbewegung um eine Achse (T30) getragen wird;
eine Arretierungsbaugruppe (M26), die funktionsfähig ist, um den Tisch (T18) relativ zum Unterbau (T14) in einer ausgewählten Winkelposition zu positionieren, wobei die Arretierungsbaugruppe (M26) umfasst:
einen Arretierungsvorsprung (M50), der auf einem von Unterbau (T14) und Tisch (T18) getragen wird;
einen Hebel (M62), der drehbar mit einem von Unterbau (T14) und Tisch (T18) verbunden ist; und
eine Arretierungsaussparung (M54), die durch den anderen von Unterbau (T14) und Tisch (T18) definiert wird, wobei der Hebel (M62) drehbar ist, um den Arretierungsvorsprung (M50) zwischen einer Arretierungseingriffsposition, in der der Arretierungsvorsprung (M50) mit der Arretierungsaussparung (M54) in Eingriff kommt, und einer Arretierungstrennposition abzulenken, in der der Arretierungsvorsprung (M50) nicht mit der Aussparung (M54) in Eingriff gebracht wird; und
eine Feineinstellungsbaugruppe (M18) zwischen dem Unterbau (T14) und dem Tisch (T18) und die funktionsfähig ist, um die Winkelposition des Tisches (T18) relativ zum Unterbau (T14) fein einzustellen, wobei die Feineinstellungsbaugruppe (M18) umfasst:
eine Welle (M114), die von einem von Unterbau (T14) und Tisch (T18) getragen wird;
ein Rotationselement (M74), das mit der Welle (M114) verbunden ist;
eine Eingriffsfläche (M78), die vom anderen von Unterbau (T14) und Tisch (T18) bereitgestellt wird, wobei das Rotationselement (M74) selektiv mit der Eingriffsfläche (M78) in Eingriff kommen kann und längs der Eingriffsfläche (M78) drehbar (T18) ist, um die Winkelposition des Tisches (T18) relativ zum Unterbau (T14) fein einzustellen; und
eine Arretierungsübersteuerungsbaugruppe (M146), die funktionsfähig ist, um den Arretierungsvorsprung (M50) von der Arretierungsaussparung (M54) zu trennen und den Arretierungsvorsprung (M50) außer Eingriff mit der Arretierungsaussparung (M54) zu halten, wenn das Rotationselement (M74) mit der Eingriffsfläche (M78) in Eingriff gebracht wird,
wobei die Arretierungsübersteuerungsbaugruppe (M146) eine Rampe (M150) umfasst, die längs einer Rotationsachse der Welle (M114) als Reaktion auf die Bewegung des Rotationselementes (M74) in Richtung der Eingriffsfläche (M78) axial beweglich ist, um dadurch den Hebel (M62) in Eingriff zu bringen, so dass sich ein Abschnitt des Hebels (M62) auf der Rampe (M150) verschiebt, um den Hebel (M62) zu drehen und den Arretierungsvorsprung (M50) in die Arretierungstrennposition abzulenken,
**dadurch gekennzeichnet, dass** der Arretierungsvorsprung (M50) mit einer Blattfeder (M60) verbunden ist, die auf dem einen von Unterbau (T14) und Tisch (T18) getragen wird, wobei der Hebel (M62) drehbar ist, um die Blattfeder (M60) zwischen einer Arretierungseingriffsposition, in der der Arretierungsvorsprung (M50) mit der Arretierungsaussparung (M54) in Eingriff kommt, und einer Arretierungstrennposition abzulenken, in der der Arretierungsvorsprung (M50) nicht mit der Aussparung (M54) in Eingriff gebracht wird,
und dadurch, dass die Rampe (M150) mit einem Gleitstück (M140) verbunden ist, das drehbar die Welle (M114) trägt, wobei das Gleitstück (M140) längs der Rotationsachse der Welle (M114) als Reaktion auf die Bewegung des Rotationselementes (M74) in Richtung der Eingriffsfläche (M78) axial beweglich ist, um dadurch den Hebel (M62) mit der Rampe (M150) in Eingriff zu bringen, um den Hebel (M62) zu drehen und die Blattfeder (M60) aus der Arretierungseingriffsposition in die Arretierungstrennposition abzulenken.

2. Elektrowerkzeug nach Anspruch 1, bei dem das Rotationselement ein Ritzel (M74) umfasst und die Eingriffsfläche eine Zahnstange (M78) umfasst, wobei das Ritzel (M74) mit der Zahnstange (M78) in Eingriff kommen kann und längs dieser drehbar (T18) ist, um die Winkelposition des Tisches (T18) relativ zum Unterbau (T14) fein einzustellen, oder wobei das Rotationselement eine Rolle umfasst, und wobei die Eingriffsfläche eine Auflage umfasst, wobei die Rolle mit der Auflage in Eingriff kommen kann und längs dieser drehbar ist, um die Winkelposition des Tisches (T18) relativ zum Unterbau (T14) fein einzustellen.

3. Elektrowerkzeug nach Anspruch 1 oder 2, bei dem das Rotationselement (M74) vom Tisch (T18) getragen wird, und bei dem die Eingriffsfläche (M78) vom Unterbau (T14) bereitgestellt wird.

4. Elektrowerkzeug nach einem der vorhergehenden Ansprüche, bei dem die Feineinstellungsbaugruppe (M18) außerdem eine Betätigungselementbaugruppe (M82) umfasst, die funktionsfähig ist, um eine Bewegung des Rotationselementes (M74) relativ zur Eingriffsfläche (M78) zu bewirken.

5. Elektrowerkzeug nach Anspruch 1, bei dem die Betätigungselementbaugruppe (M82) funktionsfähig ist, um einen selektiven Eingriff des Rotationselementes (M74) und der Eingriffsfläche (M78) zu bewirken.

6. Elektrowerkzeug nach Anspruch 5, bei dem die Betätigungselementbaugruppe (M82) eine Achse definiert, und bei dem das Rotationselement (M74) längs der Achse in und außer Eingriff mit der Eingriffsfläche (M78) beweglich ist.

7. Elektrowerkzeug nach Anspruch 6, bei dem die Feineinstellungsbaugruppe (M18) ein Vorspannelement (M142) umfasst, das funktionsfähig ist, um das Rotationselement (M74) außer Eingriff mit der Eingriffsfläche (M78) vorzuspannen.

8. Elektrowerkzeug nach Anspruch 7, bei dem das Vorspannelement (M142) zwischen der Betätigungselementbaugruppe (M82) und dem einen von Unterbau (T14) und Tisch (T18) getragen wird.

9. Elektrowerkzeug nach einem der Ansprüche 6 bis 8, bei dem die Betätigungselementbaugruppe (M82) umfasst:
ein Betätigungselement (M138), das funktionsfähig ist, um die Welle (M114) längs der Achse zu bewegen, um zu bewirken, dass sich das Rotationselement (M74) in und außer Eingriff mit der Eingriffsfläche (M78) bewegt und die Welle (M114) dreht, um eine Drehung des Rotationselementes (M74) relativ zur Eingriffsfläche (M78) zu bewirken.

10. Elektrowerkzeug nach einem der vorhergehenden Ansprüche, bei dem der Abschnitt (M154) des Hebels (M62) ein Vorsprung (M154) ist, der mit der Rampe (M150) in Eingriff kommen kann, um das Drehen des Hebels (M62) zu bewirken.

11. Elektrowerkzeug nach einem der vorhergehenden Ansprüche, bei dem die Blattfeder (M60) und der Hebel (M62) vom Tisch (T18) getragen werden, und bei dem die Arretierungsaussparung (M54) durch den Unterbau (T14) definiert wird.

12. Elektrowerkzeug nach Anspruch 10, bei dem die Arretierungsübersteuerungsbaugruppe (M146) eine Kerbe (M152) benachbart der Rampe (M150) umfasst, und bei dem der Vorsprung (M154) mit der Kerbe (M152) in Eingriff kommen kann, um zu verhindern, dass sich der Hebel (M62) nach oben dreht, um zu gestatten, dass die Blattfeder (M60) die Arretierungseingriffsposition wieder einnimmt.

13. Elektrowerkzeug nach einem der vorhergehenden Ansprüche, das außerdem eine Halterung (M68) aufweist, die mit einer Innenfläche des Tisches (T18) verbunden ist, wobei das Gleitstück (M140) zwischen der Halterung (M68) und dem Tisch (T18) getragen wird.

14. Elektrowerkzeug nach Anspruch 13, bei dem das Gleitstück (M140), die Rampe (M150) und die Welle (M114) axial als eine Einheit beweglich sind.

15. Elektrowerkzeug nach Anspruch 13 oder 14, bei dem der Hebel (M62) drehbar mit der Halterung (M68) verbunden ist.

## Revendications

1. Outil électrique, comprenant :
une base (T14), pouvant être supportée sur une surface pour supporter l'outil électrique sur la surface ;
une table (T18), supportée par la base (T14) en vue d'un déplacement pivotant autour d'un axe (T30) ;
un assemblage de cliquet (M26), servant à positionner la table (T18) par rapport à la base (T14) dans une position angulaire sélectionnée, l'assemblage de cliquet (M26) englobant :
une saillie d'encliquetage (M50), supportée sur un élément, la base (T14) ou la table (T18) ;
un levier (M62) accouplé de manière pivotante audit un élément, la base (T14) ou la table (T18) ; et
un évidement d'encliquetage (M54), défini par l'autre élément, la base (T14) ou la table (T18), le levier (M62) pouvant être pivoté pour dévier la saillie d'encliquetage (M50) entre une position à engagement du cliquet, dans laquelle la saillie d'encliquetage (M50) s'engage dans l'évidement d'encliquetage (M54), et une position à dégagement du cliquet, dans laquelle la saillie d'encliquetage (M50) n'est pas engagée dans l'évidement (M54) ; et
un assemblage d'ajustement de précision (M18) entre la base (T14) et la table (T18), et destiné à assurer l'ajustement de précision de la position angulaire de la table (T18) par rapport à la base (T14), l'assemblage d'ajustement de précision (M18) englobant :
un arbre (M114), supporté par un élément, la base (T14) ou la table (T18) ;
un élément rotatif (M74), accouplé à l'arbre (M114) ;
une surface d'engagement (M78) établie par l'autre élément, la base (T14) ou la table (T18), l'élément rotatif (M74) pouvant être engagé sélectivement dans la surface d'engagement (M78) et être tourné (T18) le long de la surface d'engagement (M78) pour ajuster avec précision la position angulaire de la table (T18) par rapport à la base (T14) ; et
un assemblage de surpassement du cliquet (M146), servant à dégager la saillie d'encliquetage (M50) de l'évidement d'encliquetage (M54) et à maintenir le dégagement de la saillie d'encliquetage (M50) de l'évidement d'encliquetage (M54) lorsque l'élément rotatif (M74) est engagé dans la surface d'engagement (M78) ;
l'assemblage de surpassement du cliquet (M146) englobant une rampe (M150), pouvant être déplacée axialement le long d'un axe de rotation de l'arbre (M114) en réponse à un déplacement de l'élément rotatif (M74) vers la surface d'engagement (M78), pour engager ainsi le levier (M62), de sorte qu'une partie du levier (M62) glisse sur la rampe (M150) pour faire pivoter le levier (M62) et dévier la saillie d'encliquetage (M50) vers la position à dégagement du cliquet ;
**caractérisé en ce que** la saillie d'encliquetage (M50) est accouplée à un ressort à lames (M60), supporté sur ledit un élément, la base (T14) ou la table (T18), le levier (M62) pouvant être pivoté pour dévier le ressort à lames (M60) entre une position à engagement du cliquet, dans laquelle la saillie d'encliquetage (M50) s'engage dans l'évidement d'encliquetage (M54), et une position à dégagement du cliquet, dans laquelle la saillie d'encliquetage (M50) n'est pas engagée dans l'évidement (M54) ;
et **en ce que** la rampe (M150) est accouplée à un bloc coulissant (M140) supportant l'arbre (M114) de manière rotative, le bloc coulissant (M1140) pouvant être déplacé axialement le long de l'axe de rotation de l'arbre (M114) en réponse au déplacement de l'élément rotatif (M74) vers la surface d'engagement (M78), pour engager ainsi le levier (M62) dans la rampe (M150), afin de faire pivoter le levier (M62) et dévier le ressort à lames (M60) de la position à engagement du cliquet vers la position à dégagement du cliquet.

2. Outil électrique selon la revendication 1, dans lequel l'élément rotatif englobe un pignon (M74), la surface d'engagement englobant une crémaillère (M78), le pignon (M74) pouvant s'engager dans la crémaillère (M78) et tourner (T18) le long de celle-ci, pour ajuster avec précision la position angulaire de la table (T18) par rapport à la base (T14), ou dans lequel l'élément rotatif englobe un rouleau, la surface d'engagement englobant un patin, le rouleau pouvant s'engager dans le patin et tourner le long de celui-ci, pour ajuster avec précision la position angulaire de la table (T18) par rapport à la base (T14).

3. Outil électrique selon les revendications 1 ou 2, dans lequel l'élément rotatif (M74) est supporté par la table (T18), ou dans lequel la surface d'engagement (M78) est établie par la base (T14).

4. Outil électrique selon l'une quelconque des revendications précédentes, dans lequel l'assemblage d'ajustement de précision (M18) englobe en outre un assemblage d'actionnement (M82), destiné à entraîner le déplacement de l'élément rotatif (M74) par rapport à la surface d'engagement (M78).

5. Outil électrique selon la revendication 1, dans lequel l'assemblage d'actionnement (M82) est destiné à entraîner un engagement sélectif de l'élément rotatif (M74) et de la surface d'engagement (M78).

6. Outil électrique selon la revendication 5, dans lequel l'assemblage d'actionnement (M82) définit un axe, et dans lequel l'élément rotatif (M74) peut être déplacé le long de l'axe, en vue de son engagement dans la surface d'engagement (M78) et de son dégagement de celle-ci.

7. Outil électrique selon la revendication 6, dans lequel l'assemblage d'ajustement de précision (M18) englobe un élément poussoir (M142), destiné à pousser l'élément rotatif (M74) afin qu'il soit dégagé de la surface d'engagement (M78).

8. Outil électrique selon la revendication 7, dans lequel l'élément poussoir (M142) est supporté entre l'assemblage d'actionnement (M82) et ledit un élément, la base (T14) ou la table (T18).

9. Outil électrique selon l'une quelconque des revendications 6 à 8, dans lequel l'assemblage d'actionnement (M82) englobe :
un actionneur (M138), destiné à déplacer l'arbre (M114) le long de l'axe, pour entraîner l'engagement de l'élément rotatif (M74) dans la surface d'engagement (M78) et son dégagement de celle-ci, et pour faire tourner l'arbre (M1114) pour entraîner la rotation de l'élément rotatif (M74) par rapport à la surface d'engagement (M78).

10. Outil électrique selon l'une quelconque des revendications précédentes, dans lequel ladite partie (M154) du levier (M62) est une patte (M154), pouvant s'engager dans la rampe (M150) pour entraîner le pivotement du levier (M62).

11. Outil électrique selon l'une quelconque des revendications précédentes, dans lequel le ressort à lames (M60) et le levier (M62) sont supportés par la table (T18), et dans lequel l'évidement d'encliquetage (M54) est défini par la base (T14).

12. Outil électrique selon la revendication 10, dans lequel l'assemblage de surpassement du cliquet (M146) englobe une encoche (M152) adjacente à la rampe (M150), la patte (M154) pouvant s'engager dans l'encoche (M152), pour empêcher le pivotement vers le haut du levier (M62) afin de permettre au ressort à lames (M60) de revenir vers la position à engagement du cliquet.

13. Outil électrique selon l'une quelconque des revendications précédentes, comprenant en outre une console (M68) accouplée à une surface interne de la table (T18), le bloc coulissant (M140) étant supporté entre la console (M68) et la table (T18).

14. Outil électrique selon la revendication 13, dans lequel le bloc coulissant (M140), la rampe (M150) et l'arbre (M114) peuvent être déplacés axialement sous forme d'une unité.

15. Outil électrique selon les revendications 13 ou 14, dans lequel le levier (M62) est accouplé de manière pivotante à la console (M68).
